# FASCICULE DE BREVET EUROPEEN

(11) **EP 0 620 142 B1**
(45) Date de publication et mention de la délivrance du brevet: **16.06.1999**
(21) Numéro de dépôt: 94400786.3
(22) Date de dépôt: 12.04.1994
(51) Int. Cl.: B60S 1/38

(54) **Balai d'essuie-glace**
Scheibenwischerblatt
Windscreen wiper

(30) Priorité: 16.04.1993 FR 9304499
(43) Date de publication de la demande: 19.10.1994
(73) Titulaire: VALEO SYSTEMES D'ESSUYAGE, 78180 Montigny-Le-Bretonneux (FR)
(72) Inventeur: Maubray, Daniel, F-92130 Issy-Les-Moulineaux (FR)
(74) Mandataire: Gamonal, Didier

(56) Documents cités:
- EP-A- 0 506 541
- EP-A- 0 523 975
- WO-A-83/02756
- DE-A- 2 028 507
- DE-A- 3 337 815
- GB-A- 702 849
- GB-A- 887 630
- US-A- 4 698 874
- US-A- 4 722 112

## Description

La présente invention concerne une lame d'essuie-glace constitué par un profilé présentant une partie dorsale destinée à la liaison mécanique avec une monture porteuse constituée d'un système de Palonniers et une lèvre racleuse mobile. La partie dorsale et la lèvre racleuse sont reliées par une charnière formée par une partie mince permettant un débattement de la lèvre racleuse par rapport à une position médiane, ladite partie dorsale présentent au moins une zone d' appui entrant en contact surfacique avec une surface d' appui complémentaire de la lèvre racleuse lorsque celle-ci est en position inclinée, le profilé étant symétrique par rapport au plan médian de la partie dorsale et de la lèvre lorsque la lèvre n'est pas sollicitée en flexion.

Le brevet français n° 1.306.952 décrit différents modes de réalisation de tels balais d'essuie-glace.

L'inclinaison de la lame racleuse est limitée dans les modes de réalisation de l'art antérieur par l'engagement du corps de la lame avec la face inférieure de la partie dorsale. Ce contact se fait suivant une ligne longitudinale.

Les forces aérodynamiques s'exerçant sur le balai d'essuie-glace lorsque le véhicule se déplace a grande vitesse, ainsi que la présence de poussières sur le bord inférieur de la partie dorsale gênent le contact linéaire, et il en résulte un vrillage de la lame conduisant à des phénomènes de broutements, ces broutements provoquent une nuisancé acoustique et accélèrent la dégradation du balai.

L'invention a pour but de remédier à cet inconvénient.

L'invention concerne plus particulièrement un balai dont la partie dorsale présente au moins une zone d'appui entrant en contact surfacique avec une zone d'appui complémentaire de la lèvre racleuse lorsque la lame racleuse est en position inclinée.

Selon l'invention, la surface d'appui de la lèvre racleuse comporte une surface plane sensiblement perpendiculaire au plan médian de la partie dorsale se poursuivant par la surface d'appui également plane, ladite surface d'appui étant inclinée en formant un angle avec la zone d' appui de la partie dorsale, ledit angle correspondant à l'angle de débattement maximum du plan de symétrie de la lèvre par rapport au plan médian de manière à ce que, après basculement de la lèvre, le contact surfacique s'établisse tout au long de la lèvre et de la partie dorsale.

Lorsque la lèvre d'essuie-glace est en position d'inclinaison maximale, correspondant à la position normale lorsque le balai est en appui sur le pare-brise le bord supérieur de la lame vient s'appuyer contre le bord inférieur de la partie dorsale sur une certaine largeur, ce qui limite le risque de vrillage et réduit les effets d'une poussière ou d'une protuberance ponctuelle sur l'un des bords de la lame.

De plus, grâce à la présence de la surface plane sensiblement horizontale,les impuretés venant se loger entre les deux surfaces ne gêneront pas le contact de ces deux surfaces.

Avantageusement, la zone d'appui de la partie doreale est sensiblement perpendiculaire au plan médian de la partie dorsale.

Selon une deuxième variante, le bord inférieur de la partie dorsale présente une zone d'appui convexe formant avec une zone d'appui concave complémentairé prévue sur le bord supérieur de la lame racleuse un angle correspondant à l'angle de débattement maximum du plan de symétrie de la lame par rapport au plan médian de la partie dorsale.

Selon une troisième variante, le bord inférieur de la partie doreale présente une zone d'appui concave formant avec une zone d'appui convexe complémentaire prévue sur le bord supérieur de la lame racleuse un angle correspondant à l'angle de débattement maximum du plan de symétrie de la lame par rapport au plan médian de la partie doreale.

L'invention sera mieux comprise à la lecture de la description qui suit, faisant référence aux dessins annexés, où:
- la figure 1 représente une vue en coupe d'une première variante de lame d'essuie-glace selon l'invention;
- la figure 2 représente une vue en coupe du balai, la lèvre étant représentée dans deux positions différentes ;
- la figure 3 représente une vue en coupe d'une variante de lame d'essuie-glace selon l'invention ;
- la figure 4 représente une vue en coupe de la lame d'essuie-glace selon la figure 3, la lèvre étant représentée dans deux positions différentes.

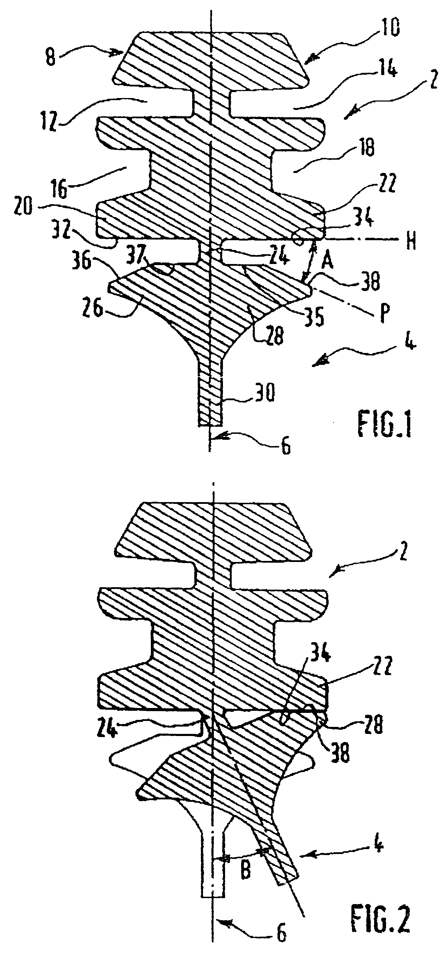

La lame d'essuie-glace représentée en figure 1 selon une vue en coupe agrandie comporte une partie dorsale 2 et une lèvre racleuse 4. Le balai est constitué est un profilé flexible en caoutchouc ou en une matière analogue, fabriquée à titre d'exemple par extrusion.

Le profilé est symétrique par rapport à un plan longitudinal 6.

La partie dorsale 2 présente sur ses deux faces latérales longitudinales 8,10 une première gorge s'étendant longitudinalement 12,14 dans laquelle viennent se loger des vertèbres destinées à adapter la rigidité longitudinale du balai et à améliorer le suivi de la surface du pare-brise.

La partie dorsale présente une deuxième gorge 16,18 s'étendant également longitudinalement pour la liaison avec la monture porteuse de la lame et plus particulièrement avec les palonniers par l'intermédiaire de griffes en formant à son extrémité inférieure deux épaulements latéraux 20,22.

Cette partie dorsale 2 est reliée à la lèvre racleuse 4 par une partie mince 24 formant une charnière.

La lèvre racleuse 2 présente une forme de flèche avec deux ailes 26,28 et une pointe 30 formant lèvre d'essuyage.

La surface inférieure des épaulements 20,22 de la partie dorsale présente des zones d'appui 32,34, ici de direction sensiblement horizontale, c'est-à-dire sensiblement perpendiculaire au plan longitudinal de symétrie 3.

La surface supérieure de la lèvre racleuse 4 présente une portion sensiblement plane 35,37 en étant sensiblement parallèle aux zones 32,34, ces portions planes se poursuivant par des surfaces inclinées 36,38 également planes mais inclinées d'un angle A considéré entre un plan H passant par les zones 32,34 et un plan P passant lesdites surfaces planes.

Comme visible sur la figure 2, la lèvre racleuse 4 a basculé autour de la charnière 24 de manière à ce que la surface plane 38 vienne en contact avec la zone opposée 34 de l'embase 2 en permettant ainsi d'obtenir un contact surfacique entre l'aile 28 de la lèvre racleuse 4 et l'épaulement 22 de la partie dorsale 2.

Comme visible sur cette figure l'angle B délimité par le plan longitudinal 6 et le plan passant par la zone médiane longitudinale de la lèvre racleuse, en position basculée, est sensiblement égale à l'angle A précédemment décrit.

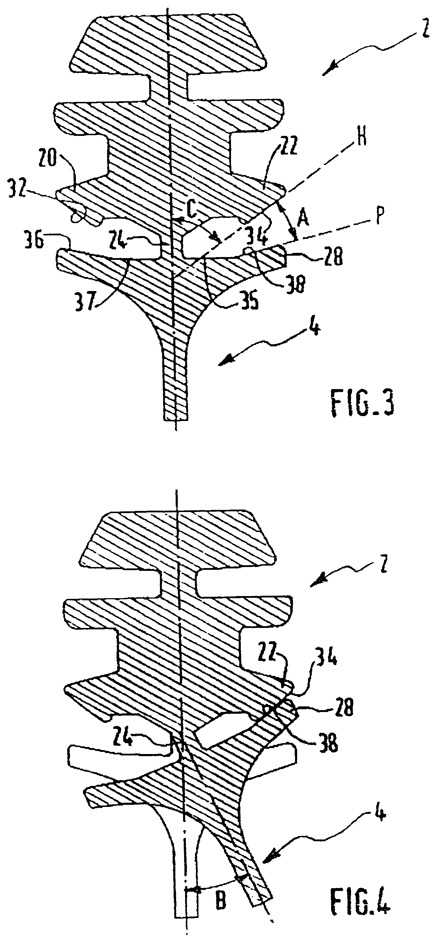

On se réfère maintenant aux figures 3 et 4 qui montrent une variante de l'invention et qui pour cela comportera les mêmes références.

En se reportant à la figure 3, les épaulements 20,22 présentent en partie inférieure des zones d'appui 32,34 formant un angle non droit avec le plan longitudinal 3 et plus particulièrement forme un angle C délimité par le plan H passant par ses zones et le plan longitudinal 6. La surface supérieure de la lèvre de raclage 4 présente des portions planes 35,37 se poursuivant vers l'extérieur par des surfaces de contact 36,38 qui forment un angle A, angle considéré à partir d'un plan P passant par ces surfaces et le plan H passant par la zone d'appui 32,34.

Comme précédemment mentionné, cet angle A est sensiblement égal à l'angle B de basculement de la lèvre de raclage par rapport au plan longitudinal 3.

Comme visible sur la figure 4, après basculement de la lèvre de raclage 4, la surface d'appui 38 vient en contact avec la zone d'appui opposée 34 en créant ainsi un contact surfacique tout au long de la lèvre et de la partie dorsale.

La présente invention n'est pas limitée aux exemples de réalisation décrits mais englobe toute variante, pour autant qu'elle reste dans le cadre de l'invention telle que définie dans les revendications.

## Revendications

1. Balai d'essuie-glace constitué par un profilé présentant une partie dorsale (2) destinée à la liaison mécanique avec le système de palonniers et une lèvre racleuse mobile (4), la partie dorsale (2) et la lèvre (4) étant reliées par une charnière (24) formée par une partie mince (24) permettant un débattement de la lèvre racleuse (4) par rapport à une position médiane, ladite partie dorsale (2) présentant au moins une zone d'appui (32,34) entrant en contact surfacique avec une surface d'appui (36,38) complémentaire de la lèvre racleuse (4) lorsque celle-ci est en position inclinée, le profilé étant symétrique par rapport au plan médian (6) de la partie dorsale (2) et de la lèvre (4) lorsque la lèvre n'est pas sollicitée en flexion, caractérisé en ce que la surface d'appui (36,38) de la lèvre racleuse (4) comporte une surface plane (35,37) sensiblement perpendiculaire au plan médian (6) de la partie dorsale (2) se poursuivant par la surface d'appui également plane (36,38), ladite surface d'appui (36, 38) étant inclinée en formant un angle (A) avec la zone d'appui (32,34) de la partie dorsale, ledit angle correspondant à l'angle de débattement maximum (B) du plan de symétrie de la lèvre par rapport au plan médian (6) de manière à ce que, après basculement de la lèvre (4), le contact surfacique s'établisse tout au long de la lèvre (4) et de la partie dorsale (2)

2. Balai d'essuie-glace selon la revendication 1, caractérisé en ce que la zone d'appui (32,34) de la partie dorsale (1) est sensiblement perpendiculaire au plan médian (6).

3. Balai d'essuie-glace selon la revendication 1, caractérisé en ce que le bord inférieur de la partie dorsale (2) présente une zone d'appui (32,34) inclinée formant avec une surface d'appui (36,38) complémentaire prévue sur le bord supérieur de la lame racleuse (4) un angle (A) correspondant à l'angle de débattement maximum (B) du plan médian(6).

4. Balai d'essuie-glace selon l'une quelconque des revendications précédentes, caractérisé en ce que le plan tangentiel (H) des zones (32,34) de l'épaulement (11) de la partie dorsale (2) coïncide sensiblement avec le plan tangentiel (P) des surfaces (36,38) de la lèvre racleuse (4) lorsque celle-ci est en position inclinée.

## Claims

1. A screen wiper blade comprising a profiled member having a dorsal portion (2) adapted for mechanical connection with the system of stirrups, together with a movable wiping lip (4), the dorsal portion (2) and the lip (4) being joined together by a hinge (24) constituted by a thin portion (24) which enables the wiping lip (4) to be displaced with respect to a median position, the said dorsal portion (2) having at least one engagement zone (32, 34) entering into surface contact with a complementary engagement surface (36, 38) of the wiping lip (4) when the latter is in an inclined position, the profiled member being symmetrical with respect to the median plane (6) of the dorsal portion (2) and lip (4) when the lip is not being subjected to an applied force causing flexion, characterised in that the engagement surface (36, 38) of the wiping lip (4) includes a flat surface (35, 37) which is substantially at right angles to the median plane (6) of the dorsal portion (2), and which is extended by the engagement surface (36, 38) which is also flat, the said engagement surface (36, 38) being inclined so as to define an angle (A) with the engagement zone (32, 34) of the dorsal portion, the said angle corresponding to the angle of maximum displacement (B) of the plane of symmetry of the lip with respect to the median plane (6), so that after tilting displacement of the lip (4), the surface contact has been established along the whole length of the lip (4) and dorsal portion (2).

2. A screen wiper blade according to Claim 1, characterised in that the engagement zone (32, 34) of the dorsal portion (2) is substantially at right angles to the median plane (6).

3. A screen wiper blade according to Claim 1, characterised in that the lower edge of the dorsal portion (2) has an inclined engagement zone (32, 34) which defines, with a complementary engagement surface (36, 38) formed on the upper edge of the wiping lip (4), an angle (A) corresponding to the angle of maximum displacement (B) from the median plane (6).

4. A screen wiper blade according to any one of the preceding Claims, characterised in that the tangential plane (H) of the zones (32, 34) of the shoulder (11) of the dorsal portion (2) are in substantial coincidence with the tangential plane (P) of the surfaces (36, 38) of the wiping lip (4) when the latter is in an inclined position.

## Patentansprüche

1. Scheibenwischerblatt, bestehend aus einem Profil, das einen Rückenteil (2) aufweist, der für die mechanische Verbindung mit einem System von Bügeln bestimmt ist, und aus einer beweglichen Wischlippe (4), wobei der Rückenteil (2) und die Wischlippe (4) durch ein Gelenkband (24) miteinander verbunden sind, das aus einem dünnen Teil (24) besteht, der eine Auslenkung der Wischlippe (4) im Verhältnis zu einer Mittelposition ermöglicht, wobei der besagte Rückenteil (2) mindestens einen Auflagebereich (32, 34) aufweist, der in flächigen Kontakt mit einer formschlüssigen Auflagefläche (36, 38) der Wischlippe (4) kommt, wenn diese sich in geneigter Position befindet, wobei das Profil symmetrisch im Verhältnis zur Mittelebene (6) des Rückenteils (2) und der Wischlippe (4) angeordnet ist, wenn die Wischlippe nicht auf Biegung beansprucht wird, **dadurch gekennzeichnet**, daß die Auflagefläche (36, 38) der Wischlippe (4) eine zur Mittelebene (6) des Rückenteils (2) in etwa senkrechte ebene Fläche (35, 37) umfaßt, die durch die ebenfalls ebene Auflagefläche (36, 38) verlängert wird, wobei die besagte Auflagefläche (36, 38) geneigt ist, indem sie einen Winkel (A) mit dem Auflagebereich (32, 34) des Rückenteils bildet, wobei der besagte Winkel dem maximalen Auslenkungswinkel (B) der Symmetrieebene der Wischlippe im Verhältnis zur Mittelebene (6) entspricht, so daß der flächige Kontakt nach dem Kippen der Wischlippe (4) an der ganzen Wischlippe (4) und am ganzen Rückenteil (2) entlang hergestellt wird.

2. Scheibenwischerblatt nach Anspruch 1, **dadurch gekennzeichnet**, daß der Auflagebereich (32, 34) des Rückenteils (1) in etwa senkrecht zur Mittelebene (6) verläuft.

3. Scheibenwischerblatt nach Anspruch 1,**dadurch gekennzeichnet**, daß die Unterkante des Rückenteils (2) einen geneigten Auflagebereich (32, 34) aufweist, der zusammen mit einem an der Oberkante der Wischlippe (4) vorgesehenen formschlüssigen Auflagebereich (36, 38) einen Winkel (A) bildet, der dem maximalen Auslenkungswinkel (B) der Mittelebene (6) entspricht.

4. Scheibenwischerblatt nach einem der vorangehenden Ansprüche , **dadurch gekennzeichnet**, daß die tangentiale Ebene (H) der Bereiche (32, 34) der Schulter (11) des Rückenteils (2) in etwa mit der tangentialen Ebene (P) der Flächen (36, 38) der Wischlippe (4) zusammenfällt, wenn diese sich in der geneigten Position befindet.
